# EUROPÄISCHE PATENTSCHRIFT

(11) **EP 4 159 032 B1**
(45) Veröffentlichungstag und Bekanntmachung des Hinweises auf die Patenterteilung: **21.05.2025**
(21) Anmeldenummer: 21199776.2
(22) Anmeldetag: 29.09.2021
(51) Int. Cl.: A01K 55/00

(54) **VORRICHTUNG ZUM HEBEN VON ZARGEN EINER MAGAZINBEUTE FÜR DIE BIENENHALTUNG**
DEVICE FOR LIFTING FRAMES OF A MAGAZINE BAG FOR BEEKEEPING
DISPOSITIF DE LEVAGE DES CADRES D'UNE RUCHE-MAGASIN POUR L'APICULTURE

(43) Veröffentlichungstag der Anmeldung: 05.04.2023
(73) Patentinhaber: Senft, Thomas, 2833 Bromberg (AT)
(72) Erfinder: Senft, Thomas, 2833 Bromberg (AT)
(74) Vertreter: Weiser Voith Gugler Patentanwälte Partnerschaft

(56) Entgegenhaltungen:
- FR-A1- 3 032 599
- FR-A1- 3 070 236
- RU-U1- 182 674
- US-A- 1 622 201

## Beschreibung

Die vorliegende Erfindung betrifft eine Hebevorrichtung für die Bearbeitung von Bienenstöcken.

In der klassischen Bienenhaltung werden Bienen in Magazinbeuten gehalten. Magazinbeuten bestehen aus einer oder mehreren übereinander gestapelten Zargen. Zargen sind Kästen, welche oben und unten offen sind und in die Holzrahmen mit Waben eingehängt werden können. Im unteren Bereich der Bienenbeute befinden sich die Brutraumzargen mit dem Brutraum. Über dem Brutraum werden Honigzargen zur Einlagerung des Honigs aufgesetzt.

Üblicherweise wird ab der Kirschblüte die erste Honigzarge auf die Brutraumzarge/n aufgesetzt. Je nach Nektarangebot und Stärke des Bienenvolks werden meist ein bis vier Honigzargen auf ein bis zwei Brutraumzargen aufgesetzt. Das Gewicht einer vollen Honigzarge beträgt je nach Rahmenmaß ca. 20 kg bis 40 kg. Dies bedeutet für den Imker, dass er bei jedem Eingriff in das Bienenvolk - je nach Höhe des Eingriffs in die Magazinbeute - eine entsprechende Anzahl von schweren Zargen vom Stapel abheben und nach der Bearbeitung wieder aufsetzen muss.

Eingriffe in das Bienenvolk, bei denen Zargen von dem die Magazinbeute bildenden Stapel abgenommen werden müssen, sind beispielsweise:
- Drohnenrahmen schneiden,
- Kontrolle der Futterreserven,
- Schwarmkontrolle,
- bei zwei Brutzargen: Kontrolle der unteren Zarge,
- Brutentnahme oder Ablegerbildung,
- Einlegen der Bienenflucht vor der Honigernte,
- Einlegen oder Entfernen von Absperrgittern,
- Einweiseln einer Königin, usw.

Zum Anheben bzw. Herausheben von Zargen aus der Magazinbeute werden derzeit entweder stationäre Kräne, z.B. mit Laufkatzen über den Bienenstöcken, oder mobile Zargenheber in der Art von Gabelstaplern verwendet. Erstere Variante ist aufwendig in der Installation, letztere ausgesprochen schwer und unhandlich, insbesondere wenn der Zargenheber zu unterschiedlichen Bienenstöcken im Feld verbracht werden muss.

Die Schrift RU 182 674 U1 offenbart einen mobilen Zargenheber mit einem unteren Rahmen, der auf Seitenleisten einer unteren Zarge und über einen Standfuß am Boden abgestützt wird, und einem hebelbetätigbaren Hebewagen, der auf dem unteren Rahmen verfahrbar gelagert ist. Um die untere Zarge freizulegen, wird der Hebewagen unter die Seitenleisten einer oberen Zarge verfahren, betätigt, um die Zargen oberhalb des Hebewagens anzuheben, und mit gehobenen Zargen auf dem unteren Rahmen in Richtung zum Imker verfahren. Dieser Zargenheber ist sperrig zu transportieren, mühsam in der Handhabung und erfordert weite Wege des Imkers, um zu der freigelegten Zarge zu gelangen.

Die Erfindung setzt sich zum Ziel, eine Hebevorrichtung für Zargen einer Magazinbeute zu schaffen, welche besonders einfach zu transportieren und handzuhaben ist und mühelose Eingriffe in die Magazinbeute ermöglicht.

Dieses Ziel wird mit einer Vorrichtung zum Heben von Zargen einer Magazinbeute für die Bienenhaltung erreicht, welche Zargen an zwei gegenüberliegenden Seiten der Magazinbeute jeweils eine etwa horizontale, vorspringende Leiste haben, wobei die Vorrichtung gemäß der Erfindung zwei Paare von Stützelementen mit jeweils einem oberen und einem unteren Stützelement hat, wobei jedes Paar an einer Seite der Magazinbeute anordenbar ist und die Stützelemente eines Paares zwischen die Leisten zweier Zargen einbringbar sind, und wobei in jedem Paar die Stützelemente über eine Scherenmechanik verbunden sind, die mittels eines Kniehebels aus zwei aneinander angelenkten Hebelelementen auseinanderspreizbar ist.

Der Zargenheber der Erfindung ist besonders einfach aufgebaut und auf die wesentlichen Elemente zum Anheben einer oder mehrerer Zargen reduziert, so dass er besonders leichtgewichtig und platzsparend ist. Damit kann er rasch und einfach zu verschiedensten Bienenstöcken transportiert werden, beispielsweise im Kofferraum eines PKWs, und ermöglicht vor Ort eine kraftsparende, mühelose Handhabung der Zargen.

Beim Gebrauch werden die Stützelemente auf jeder Seite der Magazinbeute zwischen die Leisten einer oberen und einer unteren Zarge eingeführt und gestatten dann - durch Auseinanderspreizen der Stützelemente mittels der Scherenmechaniken und Kniehebel - einen einfachen Eingriff in den Stapel, beispielsweise zum Einbringen oder Entnehmen einer Zarge in den bzw. aus dem Stapel.

Bevorzugt sind die jeweils einen Hebelelemente der beiden Kniehebel über einen gemeinsamen, die Magazinbeute quer umgreifenden Handgriff miteinander verbunden, so dass die Hebevorrichtung nach dem Einsetzen zwischen die Leisten mit nur einer Hand bedient werden kann. Der die Hebelelemente der beiden Kniehebel verbindende Handgriff bewirkt überdies eine zusätzliche mechanische Stabilisierung der Vorrichtung.

Gemäß einem weiteren bevorzugten Merkmal der Erfindung sind die Kniehebel so ausgeführt, dass sie überstreckbar sind, um in ihrer überstreckten Stellung die Scherenmechaniken in der auseinandergespreizten Stellung zu verrasten. Dies ergibt eine sehr einfache, selbstsperrende mechanische Fixierung der Vorrichtung in der angehobenen Stellung.

Erfindungsgemäß ist das obere Stützelement jedes Paares durch eine von unten an eine Leiste anlegbare Schiene gebildet, welche in zumindest zwei in Schienenlängsrichtung gegeneinander verschiebliche Teile unterteilt ist, von denen der eine Teil an eine Leiste anlegbar und der andere Teil mit der Scherenmechanik verbunden ist. Dadurch ergibt sich eine sichere und stabile Auflagerung der angehobenen Zarge/n. Ferner können damit die angehobene/n Zarge/n in der Art einer Schublade gegenüber dem Reststapel von darunterliegenden Zargen horizontal verfahren werden. Der Imker kann damit eine zu bearbeitende Zarge direkt von oben bearbeiten. Diese ermöglicht eine besonders einfache, bequeme Arbeitsweise.

Gemäß einem weiteren bevorzugten Merkmal der Erfindung können die oberen Stützelemente über eine die Magazinbeute quer umgreifende Strebe miteinander verbunden sein, um die Vorrichtung weiter zu stabilisieren.

Auch das untere Stützelement jedes Paares kann auf verschiedenste Weise ausgebildet sein, im einfachsten Fall durch die unteren Lagerpunkte der Scherenmechanik selbst. Bevorzugt ist jedoch das untere Stützelement jedes Paares durch jeweils einen auf eine Leiste auflegbaren Schenkel eines U-förmigen Bügels gebildet, welcher die Magazinbeute quer umgreift. Dies ergibt einerseits eine gute Kraftableitung auf die untere Zarge und andererseits eine zusätzliche mechanische Stabilisierung der Vorrichtung über den querverlaufenden Bügel.

Bevorzugt hat jede Scherenmechanik zwei gekreuzt aneinander angelenkte Scherenarme, von denen der erste Scherenarm mit einem Ende am oberen Stützelement angelenkt ist und mit dem anderen Ende über eine Rolle am unteren Stützelement oder auf einer Leiste abrollen kann und der zweite Scherenarm mit einem Ende über eine Rolle am oberen Stützelement abrollt und mit dem anderen Ende am unteren Stützelement angelenkt ist. Die Scherenmechaniken sind so auf das Notwendigste reduziert und damit sehr leichtgewichtig. Wenn der erste Scherenarm mit seinem untere Ende direkt auf der Leiste der unteren Zarge abrollt, kann die Länge des unteren Stützelements, beispielsweise des Schenkels des U-förmigen Bügels, verkürzt und damit weiter Gewicht eingespart werden.

In einer alternativen Variante können die Scherenmechaniken auch als gekreuzte Kurbelschwingen ausgeführt sein. Dazu hat jede Scherenmechanik zwei gekreuzt aneinander angelenkte Scherenarme, von denen der erste Scherenarm mit einem Ende am oberen Stützelement und mit dem anderen Ende über eine Schwinge am unteren Stützelement angelenkt ist und der zweite Scherenarm mit einem Ende über eine Schwinge am oberen Stützelement und mit dem anderen Ende am unteren Stützelement angelenkt ist.

Die Vorrichtung der Erfindung kann für Zargen verwendet werden, die bereits mit seitlichen Leisten ausgestattet sind. Alternativ kann die Vorrichtung auch selbst einen Satz von an den Zargen montierbaren Leisten umfassen, die vor Inbetriebnahme der Vorrichtung an allen Zargen montiert werden, die keine solchen Leisten von Haus aus haben.

Gemäß einem bevorzugten Merkmal der Erfindung steigen die Leisten der erfindungsgemäßen Vorrichtung jeweils an ihrer Unterseite in Richtung zur Zarge hin an, so dass die oberen Stützelemente bzw. Schienen in den so entstehenden unterseitigen Hinterschneidungen der Leisten einrasten und nicht abrutschen können.

Bevorzugt hat jede Leiste an ihrer Oberseite auch eine Ausnehmung für den Eingriff eines unterseitigen Vorsprungs des jeweiligen unteren Stützelements, was ein Abrutschen der Vorrichtung von der unteren Zarge, insbesondere bei Betätigen des Handgriffs, verhindert. Die Ausnehmung kann bevorzugt auch mit zumindest einer die Leiste durchsetzenden Entwässerungsbohrung versehen sein.

Die Erfindung wird nachstehend anhand von in den beigeschlossenen Zeichnungen dargestellten Ausführungsbeispielen näher erläutert. In den Zeichnungen zeigen:
die Fig. 1 bis 3 die Vorrichtung der Erfindung in drei verschiedenen Betriebsstellungen an einer Magazinbeute in einer Perspektivansicht von oben;
Fig. 4 die Vorrichtung der Erfindung in der Betriebsstellung von Fig. 2 in einer Perspektivansicht von oben;
Fig. 5 einen Querschnitt durch eine der Leisten der Zargen der Magazinbeute der Fig. 1 - 3; und
Fig. 6 eine weitere Ausführungsform der Vorrichtung der Erfindung in einer Seitenansicht.

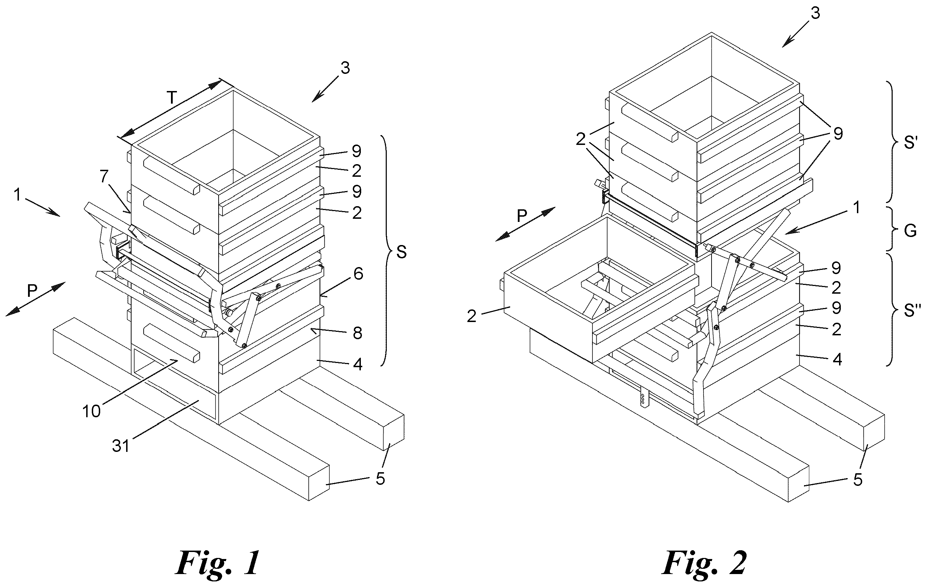

In den Fig. 1 - 4 ist eine Vorrichtung 1 zum Heben einer oder mehrerer Zargen 2 gezeigt, die als Stapel S zu einer Magazinbeute 3 übereinander gestapelt sind, wie sie in der Imkerei verwendet wird. Die Magazinbeute 3 hat in der Regel auch einen Boden 4, auf den die unterste Zarge 2 des Stapels S gestellt wird, und einen Deckel (nicht gezeigt), der die oberste Zarge 2 des Stapels S abdeckt. Die Magazinbeute 3 ist auf einer Unterkonstruktion aus beispielsweise zwei Kanthölzern 5 oder einer Palette abgestellt.

Jede Zarge 2 hat etwa die Form eines flachen Kastens, meist aus Holz, der oben und unten offen ist und in den Holzrahmen mit Waben (nicht gezeigt) eingehängt werden können, wie dem Fachmann bekannt. Die unterste/n Zarge/n 2 wird/werden in der Regel als Brutraum betrieben, wobei die unterste Zarge 2 oder der Boden 4 mit einem Flugloch an der Vorderseite 6 der Magazinbeute 3 (in den Fig. 1 - 3 hinten dargestellt und damit nicht sichtbar) versehen ist. Der Boden 4 kann auf der Rückseite 10 der Magazinbeute 3 (in den Fig. 1 - 3 vorne dargestellt) eine Revisionsöffnung 31 haben, die z.B. mit einer Klappe (nicht gezeigt) verschließbar ist.

Zwischen zwei Zargen 2 können auch Absperrgitter, Zwischenböden und Bienenfluchten (nicht gezeigt) eingelegt sein, beispielsweise zwischen Brutraum- und Honigraum-Zargen 2. Auch andere Typen von Zargen 2 können im Stapel S der Magazinbeute 3 Verwendung finden, beispielsweise Futterzargen usw.

Für den Einsatz der Hebevorrichtung 1 sind die Zargen 2 an zwei gegenüberliegenden Seiten 7, 8 der Magazinbeute 3 jeweils mit (zumindest) einer etwa horizontalen, vorspringenden Leiste 9 versehen. Die Leisten 9 verlaufen bevorzugt - jedoch nicht zwingend - über die gesamte Tiefe T einer Zarge 2. Zwischen die Leisten 9 zweier im Stapel S direkt - oder mit zwischenliegenden Zargen 2 - übereinanderliegender Zargen 2 wird die Vorrichtung 1 unter Umgreifen der Magazinbeute 3 eingebracht, siehe Fig. 1, und dann werden die Leisten 9 mittels der Vorrichtung 1 auseinandergespreizt und so die zu den oberen Leisten 9 gehörende obere Zarge 2 und alle gegebenenfalls darauf weiter gestapelten Zargen 2 angehoben, siehe Fig. 2.

Dadurch kann der zwischen dem abgehobenen Teil S' des Stapels S von Zargen 2 und dem verbliebenen Teil S" des Stapels S entstandene Spalt G genützt werden, um in diesen einzugreifen und so die oberste Zarge 2 des verbliebenen Teils S" zu bearbeiten, beispielsweise zur Inspektion oder zum Austausch der darin eingehängten Rahmen.

Der so entstandene Spalt G kann auch dazu genützt werden, zwischen zwei direkt übereinander gestapelte Zargen 2 eine weitere Zarge 2 einzubringen, wie aus der Abfolge der Fig. 1 und 2 ersichtlich. Oder es kann beispielsweise die mittlere Zarge 2 einer Dreiergruppe von Zargen 2 herausgenommen und bearbeitet werden, wenn die Vorrichtung 1 zwischen die Leisten 9 der untersten und obersten Zarge 2 der Dreiergruppe eingebracht wird, wie aus Fig. 2 alleine ersichtlich.

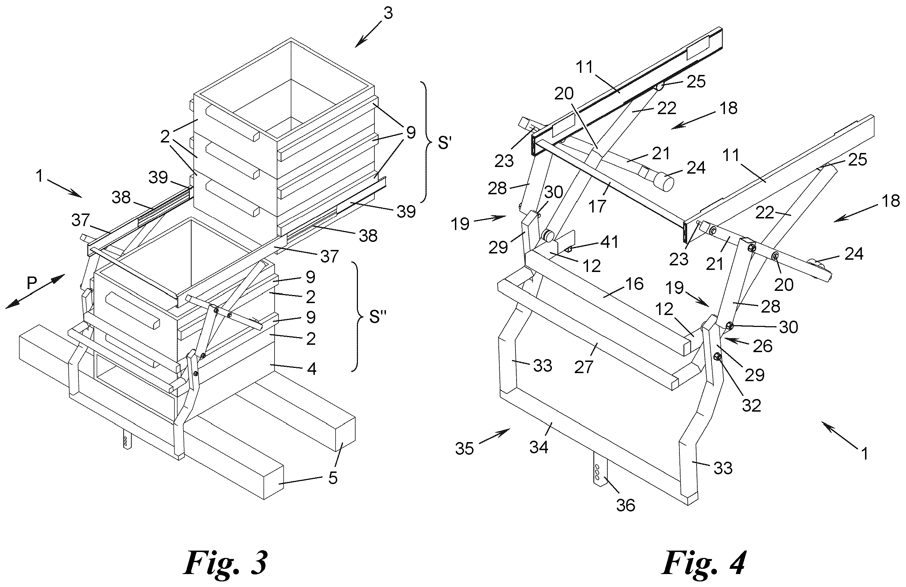

Zum Einbringen zwischen die Leisten 9 einer oberen und einer unteren Zarge 2 ist die Vorrichtung 1 von oben gesehen im wesentlichen U-förmig, siehe Fig. 4, so dass sie z.B. von der Rückseite 10 der Magazinbeute 3 her auf die Magazinbeute 3 in Pfeilrichtung P zwischen die Leisten 9 eingeschoben und aus diesen wieder herausgezogen werden kann.

Gemäß Fig. 4 hat die Vorrichtung 1 zwei Paare von Stützelementen 11, 12, und zwar ein linkes Paar aus einem oberen Stützelement 11 und einem unteren Stützelement 12 und ein rechtes Paar aus einem oberen Stützelement 11 und einem unteren Stützelement 12. Jedes Paar 11, 12 kommt in der Betriebsstellung (Fig. 1 - 3) an einer Seite 7, 8 der Magazinbeute 3 zu liegen, wobei die Stützelemente 11, 12 eines Paares zwischen die Leisten 9 zweier direkt - oder mit zwischenliegenden Zargen 2 - übereinanderliegender Zargen 2 eingebracht werden.

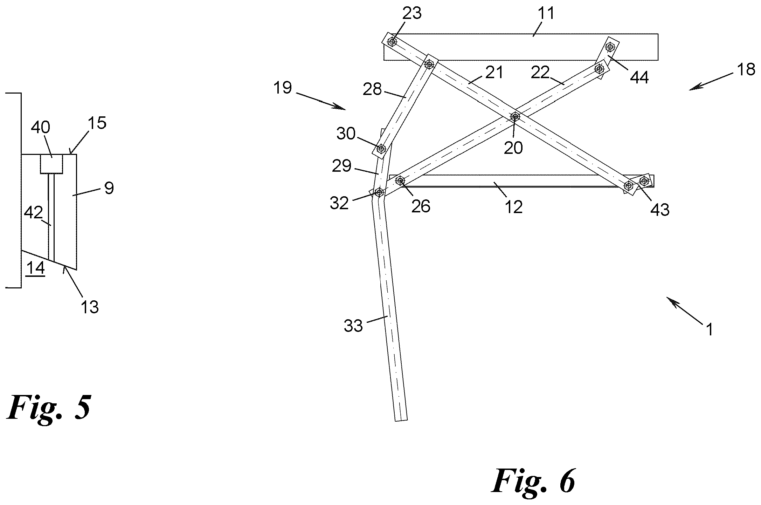

Die oberen Stützelemente 11 sind beispielsweise Schienen, die über die gesamte Länge der Leisten 9 verlaufen. Wie in Fig. 5 gezeigt, können die Unterseiten 13 der Leisten 9 in Richtung zur Zarge 2 hin schräg (oder gestuft, nicht gezeigt) ansteigen, so dass sich eine unterseitige Hinterschneidung 14 zwischen Leiste 9 und Zarge 2 ergibt. In der Hinterschneidung 14 kann das jeweilige obere Stützelement 11 (hier: die Schiene) einrasten. Dazu kann die Oberseite des Stützelements 11 komplementär zur Unterseite 13 ausgebildet sein.

Die unteren Stützelemente 12 könnten ebenfalls Schienen sein, die auf der Oberseite 15 der jeweiligen Leiste 9 zu liegen kommen und z.B. über die gesamte Länge der Leiste 9 verlaufen. Im gezeigten Beispiel sind die unteren Stützelemente 12 jedoch kurze Schenkel eines U-förmigen Bügels 16, welcher die Magazinbeute 3 auf der Rückseite 10 quer umspannt, d.h. umgreift.

Die oberen Stützelemente 11 können in analoger Weise über eine Strebe 17 an der Seite 10 der Magazinbeute 3 miteinander verbunden sein. Bügel 16 und/oder Strebe 17 können auch entfallen, um den Preis einer etwas verringerten Stabilität, jedoch mit dem Vorteil eines reduzierten Gewichts.

Zum vertikalen Auseinanderspreizen der Stützelemente 11, 12 und damit Abheben der oben Zarge/n 2 von der/den unteren sind die Stützelemente 11, 12 in jedem Paar über eine Scherenmechanik 18 miteinander verbunden, und die Scherenmechaniken 18 sind jeweils mittels eines Kniehebels 19 auseinanderspreizbar.

Die Scherenmechaniken 18 können aus einer beliebigen Anzahl von Scherenarmen aufgebaut sein, auch in der Art einer Nürnberger Schere. In der dargestellten Ausführungsform mit geringstem Gewicht hat jede Scherenmechanik 18 nur zwei in der Form eines "X" bei 20 aneinander angelenkte Scherenarme 21, 22. Der erste Scherenarm 21 ist mit seinem oberen Ende am oberen Stützelement 11 bei 23 schwenkbar angelenkt, und zwar (hier:) an dem dem Bügel 16 zugewandten Ende des Stützelements 11. Das untere Ende des ersten Scherenarms 21 rollt über eine Rolle 24 auf der Oberseite 15 einer unteren Leiste 9 oder - wenn das untere Stützelement 12 z.B. über die gesamte Länge der Leiste 9 verläuft - auf dem unteren Stützelement 12 ab. In letzterem Fall kann das untere Ende des ersten Scherenarms 21 auch ohne Rolle 24 auf dem unteren Stützelement 12 gleitend geführt sein.

Der zweite Scherenarm 22 ist mit seinem oberen Ende am oberen Stützelement 11 gleitend geführt, z.B. in einer entsprechenden Gleitführung, oder rollt mit Hilfe einer Rolle 25 am oberen Stützelement 11 ab. Das untere Ende des zweiten Scherenarms 22 ist bei 26 schwenkbar am unteren Stützelement 12 angelenkt. Optional könnte der zweite Scherenarm 22 mittels der Rolle 25 auch direkt an der Unterseite 13 einer oberen Leiste 9 abrollen, wenn das obere Stützelement 11 z.B. ebenso kurz ist wie das untere Stützelement 12.

Die beiden zweiten Scherenarme 22 können zur zusätzlichen Stabilisierung optional über einen weiteren, die Seite 10 der Magazinbeute 3 umgreifenden U-förmigen Bügel 27 miteinander verbunden sein. Falls gewünscht, könnten auch die der Seite 10 zugewandten Enden der beiden ersten Scherenarme 21 über einen gleichartigen Bügel miteinander verbunden sein (nicht gezeigt).

Die Kniehebel 19 für die Betätigung der Scherenmechaniken 18 setzen sich jeweils aus zwei Hebelelementen 28, 29 zusammen, deren eine Enden bei 30 schwenkbar aneinander angelenkt sind und deren andere Enden jeweils entweder an einem der Stützelemente 11, 12 oder (hier:) einem der Scherenarme 21, 22 fernab deren gegenseitiger Anlenkung 20 angreifen.

Eines oder mehrere der Hebelelemente 28, 29 können mit einem Griff ausgestattet oder zu einem solchen verlängert sein. Im gezeigten Beispiel ist jedes Hebelelement 29 über seine Anlenkung 32 am jeweiligen Scherenarm 22 hinaus zu einem zweiarmigen Hebel verlängert, d.h. hat einen seiner Anlenkung 30 am anderen Hebelelement 28 bezüglich der Anlenkung 32 gegenüberliegenden Griff 33. Die Griffe 33 beider Hebelelemente 29 können optional über eine Stange 34 zu einem Handgriff 35 miteinander verbunden sein, welcher die Magazinbeute 3 an ihrer Rückseite 10 quer umgreift. Wie aus der Abfolge der Fig. 1 und 2 ersichtlich, können somit durch Abwärtsschwenken des Handgriffs 35 die Kniehebel 19 gestreckt und damit die Scherenmechaniken 18 gespreizt werden, um die obere/n Zarge/n 2 aus dem Stapel S anzuheben. Optional sind die Kniehebel 19 überstreckbar, um in ihrer überstreckten Stellung die Scherenmechaniken 18 in der auseinandergespreizten Stellung zu verrasten.

Der Handgriff 35 kann zusätzlich mit einem Fortsatz 36 versehen sein, welcher in der abwärtsgeschwenkten Stellung des Handgriffs 35 (Fig. 2) beispielsweise mit dem Fuß festgehalten oder mittels einer entsprechenden Verriegelung (nicht gezeigt) am Boden 4 oder den Kanthölzern 5 temporär fixiert werden kann.

Fig. 3 zeigt eine weitere Betriebsstellung der Vorrichtung 1, die mit einer optionalen Ausführungsform der oberen Stützelemente bzw. Schienen 11 erreicht werden kann. Die Stützelemente bzw. Schienen 11 sind dazu in zumindest zwei in Schienenlängsrichtung bzw. Pfeilrichtung P gegeneinander verschiebliche Teile 37, 38, 39 unterteilt. Der oberste oder äußerste Teil 39 ist für das Ergreifen einer oberen Leiste 9 ausgebildet und der unterste oder innerste Teil 37 mit der Scherenmechanik 18 verbunden. Dadurch können in der angehobenen Stellung des oberen Stapelteils S' (Fig. 2) durch Verschieben des Teils 39 gegenüber dem Teil 37 die angehobene/n Zarge/n 2 in Pfeilrichtung P quer zum darunter verbliebenen Reststapelteil S" von Zargen 2 verschoben werden, siehe Fig. 3. Die damit freiliegende oberste Zarge 2 des verbliebenen Reststapelteils S" kann nun von oben bearbeitet werden, ohne dass sie aus dem Stapel S entnommen werden muss.

Wie in Fig. 5 gezeigt, können an den Oberseiten 15 der Leisten 9 jeweils eine oder mehrere Ausnehmungen 40 für den Eingriff von Vorsprüngen 41 (Fig. 4) der unteren Stützelemente 12 vorgesehen werden. Dies sichert die Vorrichtung 1 gegen ein Verrutschen in Pfeilrichtung P, insbesondere beim Verschwenken des Handgriffs 35. Um ein Stehen von Wasser in den Ausnehmungen 40 zu verhindern, können diese mit die Leiste 9 durchsetzenden Entwässerungsbohrungen 42 versehen werden.

Fig. 6 zeigt eine alternative Ausführungsform der Scherenmechaniken 18. Das untere Ende des ersten Scherenarms 21 ist hier über eine Schwinge 43 an dem der Anlenkung 26 des zweiten Scherenarms 22 gegenüberliegenden Ende des unteren Stützelements 12 angelenkt, und das obere Ende des zweiten Scherenarms 22 über eine Schwinge 44 an dem der Anlenkung 23 des ersten Scherenarms 21 gegenüberliegenden Ende des oberen Stützelements 11. Die übrigen Elemente der Scherenmechaniken 18 und und die Kniehebel 19 sind gleich wie bei der Ausführungsform der Fig. 1 - 4.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Vorrichtung (1) zum Heben von Zargen (2) einer Magazinbeute (3) für die Bienenhaltung, welche Zargen (2) an zwei gegenüberliegenden Seiten (7, 8) der Magazinbeute (3) jeweils eine etwa horizontale, vorspringende Leiste (9) haben, **gekennzeichnet durch**
zwei Paare von Stützelementen (11, 12) mit jeweils einem oberen und einem unteren Stützelement, wobei jedes Paar an einer Seite (7, 8) der Magazinbeute (3) anordenbar ist und die Stützelemente (11, 12) eines Paares zwischen die Leisten (9) zweier Zargen (2) einbringbar sind,
wobei in jedem Paar die Stützelemente (11, 12) über eine Scherenmechanik (18) verbunden sind, die mittels eines Kniehebels (19) aus zwei aneinander angelenkten Hebelelementen (28, 29) auseinanderspreizbar ist,
**dadurch gekennzeichnet, dass** das obere Stützelement (11) jedes Paares durch eine Schiene gebildet ist, welche in zumindest zwei in Schienenlängsrichtung gegeneinander verschiebliche Teile (37 - 39) unterteilt ist, von denen der eine Teil (39) von unten an eine der Leisten (9) anlegbar und der andere Teil (37) mit der Scherenmechanik (18) verbunden ist.

2. Vorrichtung nach Anspruch 1, **dadurch gekennzeichnet, dass** die jeweils einen Hebelelemente (29) der beiden Kniehebel (19) über einen gemeinsamen, die Magazinbeute (3) quer umgreifenden Handgriff (35) miteinander verbunden sind.

3. Vorrichtung nach Anspruch 1 oder 2, **dadurch gekennzeichnet, dass** die Kniehebel (19) überstreckbar sind, um in ihrer überstreckten Stellung die Scherenmechaniken (18) in der auseinandergespreizten Stellung zu verrasten.

4. Vorrichtung nach einer der Ansprüche 1 bis 3, **dadurch gekennzeichnet, dass** die oberen Stützelemente (11) über eine die Magazinbeute (3) quer umgreifende Strebe (17) miteinander verbunden sind.

5. Vorrichtung nach einem der Ansprüche 1 bis 4, **dadurch gekennzeichnet, dass** das untere Stützelement (12) jedes Paares durch jeweils einen auf eine Leiste (9) auflegbaren Schenkel eines U-förmigen Bügels (16) gebildet ist, welcher die Magazinbeute (3) quer umgreift.

6. Vorrichtung nach einem der Ansprüche 1 bis 5, **dadurch gekennzeichnet, dass** jede Scherenmechanik (18) zwei gekreuzt aneinander angelenkte Scherenarme (21, 22) hat, von denen der erste Scherenarm (21) mit einem Ende am oberen Stützelement (11) angelenkt ist und mit dem anderen Ende über eine Rolle (24) am unteren Stützelement (12) oder auf einer Leiste (9) abrollen kann und der zweite Scherenarm (22) mit einem Ende über eine Rolle (25) am oberen Stützelement (11) abrollt und mit dem anderen Ende am unteren Stützelement (12) angelenkt ist.

7. Vorrichtung nach einem der Ansprüche 1 bis 5, **dadurch gekennzeichnet, dass** jede Scherenmechanik (18) zwei gekreuzt aneinander angelenkte Scherenarme (21, 22) hat, von denen der erste Scherenarm (21) mit einem Ende am oberen Stützelement (11) und mit dem anderen Ende über eine Schwinge (43) am unteren Stützelement (12) angelenkt ist und der zweite Scherenarm (22) mit einem Ende über eine Schwinge (44) am oberen Stützelement (11) und mit dem anderen Ende am unteren Stützelement (12) angelenkt ist.

8. Vorrichtung nach einem der Ansprüche 1 bis 7, ferner **gekennzeichnet durch** einen Satz von an den Zargen (2) montierbaren Leisten (9), die jeweils an ihrer Unterseite (13) in Richtung zur Zarge (2) hin ansteigen.

9. Vorrichtung nach Anspruch 8, **dadurch gekennzeichnet, dass** jede Leiste (9) an ihrer Oberseite (15) eine Ausnehmung (40) für den Eingriff eines unterseitigen Vorsprungs (41) des jeweiligen unteren Stützelements (12) aufweist.

10. Vorrichtung nach Anspruch 9, **dadurch gekennzeichnet, dass** die Ausnehmung (40) mit zumindest einer die Leiste (9) durchsetzenden Entwässerungsbohrung (42) versehen ist.

## Claims

1. A device (1) for lifting frames (2) of a magazine hive (3) for beekeeping, which frames (2) each have an approximately horizontal, projecting strip (9) on two opposite sides (7, 8) of the magazine hive (3), **characterised by**
two pairs of support elements (11, 12) each with an upper and a lower support element, wherein each pair can be arranged on one side (7, 8) of the magazine hive (3) and the support elements (11, 12) of one pair can be inserted between the strips (9) of two frames (2),
wherein, in each pair, the support elements (11, 12) are connected via a scissor mechanism (18) which can be spread apart by means of a toggle lever (19) consisting of two lever elements (28, 29) articulated to one another,
**characterised in that** the upper support element (11) of each pair is formed by a rail which is divided into at least two parts (37 - 39) which are displaceable relative to one another in longitudinal direction of the rail, of which the one part (39) can be abutted from below against one of the strips (9) and the other part (37) is connected to the scissor mechanism (18).

2. The device according to claim 1, **characterised in that** the respective one lever elements (29) of the two toggle levers (19) are connected to one another via a common handle (35) which transversely encompasses the magazine hive (3).

3. The device according to claim 1 or 2, **characterised in that** the toggle levers (19) can be overstretched in order, in their overstretched position, to lock the scissor mechanisms (18) in the spread-apart position.

4. The device according to any one of claims 1 to 3, **characterised in that** the upper support elements (11) are connected to one another via a strut (17) which transversely encompasses the magazine hive (3).

5. The device according to any one of claims 1 to 4, **characterised in that** the lower support element (12) of each pair is formed by a respective leg of a U-shaped bracket (16) which can be placed on a strip (9) and which transversely encompasses the magazine hive (3).

6. The device according to any one of claims 1 to 5, **characterised in that** each scissor mechanism (18) has two scissor arms (21, 22) articulated crosswise to one another, of which the first scissor arm (21) is articulated with one end on the upper support element (11) and can roll with the other end via a roller (24) on the lower support element (12) or on a strip (9), and the second scissor arm (22) rolls with one end via a roller (25) on the upper support element (11) and is articulated with the other end on the lower support element (12).

7. The device according to any one of claims 1 to 5, **characterised in that** each scissor mechanism (18) has two scissor arms (21, 22) articulated crosswise to one another, of which the first scissor arm (21) is articulated with one end on the upper support element (11) and with the other end via a rocker (43) to the lower support element (12) and the second scissor arm (22) is articulated with one end via a rocker (44) on the upper support element (11) and with the other end to the lower support element (12).

8. The device according to any one of claims 1 to 7, further **characterised by** a set of strips (9) which can be mounted on the frames (2) and which each rise on their underside (13) in the direction of the frame (2).

9. The device according to claim 8, **characterised in that** each strip (9) has a recess (40) on its upper side (15) for the engagement of a projection (41) on the underside of the respective lower support element (12).

10. The device according to claim 9, **characterised in that** the recess (40) is provided with at least one drainage bore (42) passing through the strip (9).

## Revendications

1. Dispositif (1) pour soulever des cadres (2) d'une ruche modulaire (3) destinée à l'apiculture, lesquels cadres (2) possèdent sur deux côtés (7, 8) opposés de la ruche modulaire (3) respectivement un rebord (9) en saillie à peu près horizontal, **caractérisé par**
deux paires d'éléments de support (11, 12) avec respectivement un élément de support supérieur et un élément de support inférieur, dans lequel chaque paire peut être disposée sur un côté (7, 8) de la ruche modulaire (3) et les éléments de support (11, 12) d'une paire peuvent être insérés entre les rebords (9) de deux cadres (2),
dans lequel, dans chaque paire, les éléments de support (11, 12) sont reliés par un mécanisme à ciseaux (18) qui peut être écarté au moyen d'une genouillère (19) de deux éléments de levier (28, 29) articulés l'un à l'autre, **caractérisé en ce que** l'élément de support supérieur (11) de chaque paire est formé par un rail, lequel est subdivisé en au moins deux parties (37 - 39) pouvant déplacer l'une vers l'autre dans la direction longitudinale du rail, parmi lesquelles l'une partie (39) peut être appuyée par le bas sur un des rebords (9) et l'autre partie (37) est reliée avec le mécanisme à ciseaux (18).

2. Dispositif selon la revendication 1, **caractérisé en ce que** les uns éléments de levier (29) respectifs des deux genouillères (19) sont reliés ensemble par une poignée (35) commune enserrant transversalement la ruche modulaire (3).

3. Dispositif selon la revendication 1 ou la 2, **caractérisé en ce que** les genouillères (19) peuvent êtres surétendues afin d'enclencher les mécanismes à ciseaux (18) dans la position écartée dans leur position surétendue.

4. Dispositif selon l'une des revendications 1 à 3, **caractérisé en ce que** les éléments de support supérieurs (11) sont reliés ensemble par une entretoise (17) enserrant transversalement la ruche modulaire (3).

5. Dispositif selon l'une des revendications 1 à 4, **caractérisé en ce que** l'élément de support inférieur (12) de chaque paire est formé respectivement par une branche d'un arceau (16) en forme de U pouvant être appuyé sur un rebord (9), lequel enserre transversalement la ruche modulaire (3).

6. Dispositif selon l'une des revendications 1 à 5, **caractérisé en ce que** chaque mécanisme à ciseaux (18) possède deux branches de ciseau (21, 22) articulées ensemble de manière croisée, parmi lesquelles la première branche de ciseau (21) est articulée avec une extrémité à l'élément de support supérieur (11) et, avec l'autre extrémité, peut rouler sur l'élément de support inférieur (12) ou sur un rebord (9) par le biais d'une roulette (24) et la seconde branche de ciseau (22) roule avec une extrémité sur l'élément de support supérieur (11) par le biais d'une roulette (25) et est articulée avec l'autre extrémité sur l'élément de support inférieur (12).

7. Dispositif selon l'une des revendications 1 à 5, **caractérisé en ce que** chaque mécanisme à ciseaux (18) possède deux branches de ciseau (21, 22) articulées ensemble de manière croisée, parmi lesquelles la première branche de ciseau (21) est articulée avec une extrémité à l'élément de support supérieur (11) et avec l'autre extrémité sur l'élément de support inférieur (12) par le biais d'un bras oscillant (43) et la seconde branche de ciseau (22) est articulée avec une extrémité sur l'élément de support supérieur (11) par le biais d'un bras oscillant (44) et avec l'autre extrémité sur l'élément de support inférieur (12).

8. Dispositif selon l'une des revendications 1 à 7, **caractérisé en outre par** un ensemble de rebords (9) pouvant être montés sur les cadres (2) qui s'élèvent respectivement sur leur côté inférieur (13) en direction du cadre (2).

9. Dispositif selon la revendication 8, **caractérisé en ce que** chaque rebord (9) présente un évidement (40) sur son côté supérieur (15) pour l'insertion d'une saillie (41) du côté inférieur de l'élément de support inférieur (12) respectif.

10. Dispositif selon la revendication 9, **caractérisé en ce que** l'évidement (40) est muni d'au moins un trou de drainage (42) traversant le rebord (9).
